# EUROPEAN PATENT SPECIFICATION

(11) **EP 4 190 540 B1**
(45) Date of publication and mention of the grant of the patent: **06.03.2024**
(21) Application number: 22208616.7
(22) Date of filing: 21.11.2022
(51) Int. Cl.: B29D 30/06, B29D 30/48, B60C 15/06, B60C 19/00, B60C 15/024

(54) **TIRE, TIRE MOLD, AND TIRE PRODUCTION METHOD**
REIFEN, REIFENFORM UND REIFENHERSTELLUNGSVERFAHREN
PNEU, MOULE DE PNEU ET PROCÉDÉ DE PRODUCTION DE PNEU

(30) Priority: 02.12.2021 JP 2021196153
(43) Date of publication of application: 07.06.2023
(73) Proprietor: Sumitomo Rubber Industries, Ltd., Kobe-shi, Hyogo 651-0072 (JP)
(72) Inventor: KAWAZU, Akari, Kobe-shi, 651-0072 (JP)
(74) Representative: Manitz Finsterwald Patent- und Rechtsanwaltspartnerschaft mbB

(56) References cited:
- EP-A1- 3 103 609
- EP-A1- 3 656 582
- EP-A1- 3 782 826

## Description

### BACKGROUND OF THE INVENTION

### Field of the Invention

The present invention relates to a tire, a tire mold, and a tire production method.

### Background Art

A tire is obtained by pressurizing and heating a green tire within a mold. The bead portions of the tire are shaped by bead rings of the mold. For discharging air, the bead rings are provided with vent holes. At the bead portions shaped by the bead rings, whisker-shaped spews made of a crosslinked rubber are formed.

Various studies have been conducted for bead rings such that spews do not interfere with fitting a tire onto a rim (for example, Japanese Laid-Open Patent Publication No. 2020-131535).

There have been an increasing number of cases where, in view of the appearance of a rim onto which a tire is fitted, in order to impart a metallic appearance to the rim, the surface of the rim is formed as a surface having micro irregularities instead of a conventional smooth surface.

As for such a rim, when fitting a tire onto the rim, spews are easily jammed between bead portions and the rim. Depending on the degree of jamming of spews, the appearance quality and the internal pressure maintaining performance of the tire may deteriorate. A spew-less mold which prevents formation of spews may be used, but in this case, it is necessary to install a new facility in order to clean the mold. Patent document EP 3 782 826 A1 discloses a tire having the features of the preamble of independent claim 1.

The present invention has been made in view of such circumstances. An object of the present invention is to provide a tire that can prevent spews form being jammed when fitted onto a rim, and a tire mold and a tire production method for obtaining this tire.

### SUMMARY OF THE INVENTION

A tire according to an aspect of the present invention includes a bead portion to be fitted onto a rim. The bead portion includes a first vent line extending in a circumferential direction, a second vent line located outward of the first vent line and extending in the circumferential direction, a columnar protrusion located outward of the second vent line, and a saw cut extending between the first vent line and the columnar protrusion and intersecting the second vent line. The first vent line, the second vent line, the columnar protrusion, and the saw cut project from an outer surface of the bead portion. The second vent line is located on the columnar protrusion side with respect to a midpoint between the first vent line and the columnar protrusion.

Preferably, in the tire, the saw cut has a width smaller than an outer diameter of the columnar protrusion.

Preferably, in the tire, a ratio of a distance from the first vent line to the second vent line to a distance from the first vent line to the columnar protrusion is not greater than 70%.

Preferably, in the tire, the bead portion includes a bead including a core extending in the circumferential direction and an apex located radially outward of the core. The outer surface of the bead portion includes a seat surface located radially inward of the bead, a flange surface located axially outward of the bead, and a heel surface located between the seat surface and the flange surface. In a cross-section of the tire along a plane including a rotation axis of the tire, a contour of the heel surface is represented by an arc. The first vent line is located at a center portion of the heel surface.

Preferably, in the tire, the columnar protrusion is located at a portion at a boundary between the heel surface and the flange surface.

A tire mold according to an aspect of the present invention is a mold for producing the above-described tire. The tire mold includes a bead ring for forming the bead portion. The bead ring includes a bead-forming surface for forming the outer surface of the bead portion. A first vent line groove for forming the first vent line, a second vent line groove for forming the second vent line, a vent hole for forming the columnar protrusion, and a saw cut groove for forming the saw cut are provided on the bead-forming surface. The second vent line groove is located on the vent hole side with respect to a midpoint between the first vent line groove and the vent hole.

A tire production method according to an aspect of the present invention is a method for producing the above-described tire. The tire production method includes the steps of: (1) preparing a green tire for the tire; and (2) pressurizing and heating the green tire within a mold. The mold includes a bead ring for forming the bead portion. The bead ring includes a bead-forming surface for forming the outer surface of the bead portion. A first vent line groove for forming the first vent line, a second vent line groove for forming the second vent line, a vent hole for forming the columnar protrusion, and a saw cut groove for forming the saw cut are provided on the bead-forming surface. The second vent line groove is located on the vent hole side with respect to a midpoint between the first vent line groove and the vent hole.

According to the present invention, a tire that can prevent spews form being jammed when fitted onto a rim, and a tire mold and a tire production method for obtaining this tire are obtained.

### BRIEF DESCRIPTION OF THE DRAWINGS

FIG. 1 is a cross-sectional view showing a part of a tire according to an embodiment of the present invention;
FIG. 2 is a cross-sectional view showing a part of a bead portion;
FIG. 3 is a development showing a part of a heel surface;
FIG. 4 is a cross-sectional view showing a part of a tire mold according to an embodiment of the present invention;
FIG. 5 is a perspective view showing a part of a bead ring;
FIG. 6 is a development showing a part of a heel-forming surface;
FIG. 7 is a cross-sectional view taken along a line VII-VII in FIG. 6;
FIG. 8 is a cross-sectional view taken along a line VIII-VIII in FIG. 6;
FIG. 9 is a cross-sectional view taken along a line IX-IX in FIG. 6;
FIG. 10 is a cross-sectional view taken along a line X-X in FIG. 6; and
FIG. 11 is a schematic diagram showing an air discharge path formed in a bead ring.

### DETAILED DESCRIPTION

Hereinafter, the present invention will be described in detail based on preferred embodiments with appropriate reference to the drawings.

In the present disclosure, a state where a tire is fitted on a normal rim, the internal pressure of the tire is adjusted to a normal internal pressure, and no load is applied to the tire is referred to as a normal state.

In the present disclosure, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between right and left beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

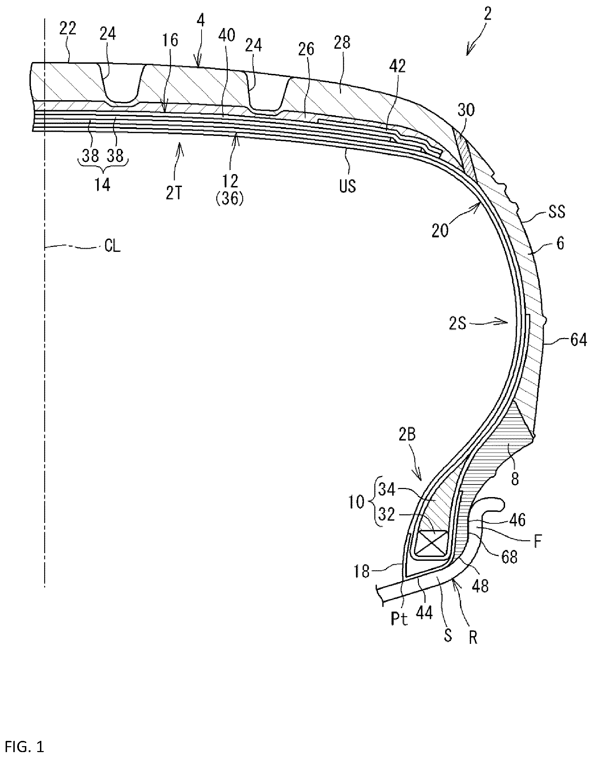

FIG. 1 shows a part of a tire 2 according to an embodiment of the present invention. The tire 2 is a pneumatic tire for a passenger car.

FIG. 1 shows a part of a cross-section (hereinafter, also referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, a position indicated by reference character Pt is a toe of the tire 2. The toe Pt is the boundary between an outer surface SS and an inner surface US of the tire 2.

The tire 2 is fitted on a rim R. The rim R is a normal rim. The interior of the tire 2 is filled with air to adjust the internal pressure of the tire 2. The tire 2 fitted on the rim R is also referred to as a tire-rim assembly. The tire-rim assembly includes the rim R and the tire 2 fitted on the rim R.

The rim R includes a seat S and a flange F. When the tire 2 is fitted onto the rim R, the seat S comes into contact with a bead portion 2B from the radially inner side, and the flange F comes into contact with the bead portion 2B from the axially outer side.

The tire 2 includes a tread 4, a pair of sidewalls 6, a pair of clinches 8, a pair of beads 10, a carcass 12, a belt 14, a band 16, a pair of chafers 18, and an inner liner 20 as components thereof.

The tread 4 comes into contact with a road surface at an outer surface thereof. This outer surface is a tread surface 22. The tread surface 22 forms a part of the outer surface SS of the tire 2.

Grooves 24 are formed on the tread 4. The tread 4 includes a base portion 26 and a cap portion 28. The base portion 26 is formed from a crosslinked rubber for which heat generation properties are taken into consideration. The cap portion 28 is located radially outward of the base portion 26. The cap portion 28 is formed from a crosslinked rubber for which wear resistance and grip performance are taken into consideration.

Each sidewall 6 is connected to an end of the tread 4. The sidewall 6 of the tire 2 is connected to the end of the tread 4 via a wing 30. The sidewall 6 is located radially inward of the tread 4. The sidewall 6 is formed from a crosslinked rubber for which cut resistance is taken into consideration. The wing 30 is formed from a crosslinked rubber for which adhesiveness is taken into consideration.

Each clinch 8 is located radially inward of the sidewall 6. The clinch 8 comes into contact with the flange F. The clinch 8 is formed from a crosslinked rubber for which wear resistance is taken into consideration.

Each bead 10 is located axially inward of the clinch 8. The bead 10 includes a core 32 and an apex 34. The core 32 extends in the circumferential direction. The core 32 includes a wire made of steel, which is not shown. The core 32 is formed by winding the wire in the circumferential direction by several turns. The apex 34 is located radially outward of the core 32. The apex 34 is tapered outward in the radial direction. The apex 34 is formed from a crosslinked rubber that has high stiffness.

The carcass 12 is located inward of the tread 4, the pair of sidewalls 6, and the pair of clinches 8. The carcass 12 extends on and between a first bead 10 and a second bead 10 out of the pair of beads 10. The carcass 12 includes at least one carcass ply 36.

The carcass ply 36 is turned up around each core 32 from the inner side toward the outer side in the axial direction.

The carcass ply 36 includes a large number of carcass cords aligned with each other, which are not shown. These carcass cords intersect the equator plane CL. The carcass 12 of the tire 2 has a radial structure. In the tire 2, a cord formed from an organic fiber is used as each carcass cord. Examples of the organic fiber include nylon fibers, rayon fibers, polyester fibers, and aramid fibers.

The belt 14 is stacked on the carcass 12 on the radially inner side of the tread 4. The belt 14 includes two layers 38 stacked in the radial direction.

Each of the two layers 38 includes a large number of belt cords aligned with each other, which are not shown. The belt cords are inclined relative to the equator plane CL. The material of the belt cords is steel.

The band 16 is located between the tread 4 and the belt 14 in the radial direction. The band 16 of the tire 2 includes a full band 40 which covers the entirety of the belt 14, and a pair of edge bands 42 which cover end portions of the full band 40.

The band 16 includes a band cord, which is not shown. At each of the full band 40 and the edge bands 42, the band cord is helically wound in the circumferential direction. The band 16 has a jointless structure. A cord formed from an organic fiber is used as the band cord. Examples of the organic fiber include nylon fibers, rayon fibers, polyester fibers, and aramid fibers.

Each chafer 18 is located radially inward of the bead 10. The chafer 18 includes a fabric and a rubber with which the fabric is impregnated. As shown in FIG. 1, of the chafer 18, a portion located radially inward of the core 32 comes into contact with the seat S of the rim R. An axially outer portion of the chafer 18 is located between a turned-up portion of the carcass ply 36 and the clinch 8. An axially inner portion of the chafer 18 forms the inner surface US of the tire 2 together with the inner liner 20 described later.

The inner liner 20 is located inward of the carcass 12. The inner liner 20 forms the inner surface US of the tire 2. The inner liner 20 is formed from a crosslinked rubber that has an excellent air blocking property. The inner liner 20 maintains the internal pressure of the tire 2.

The tire 2 includes a tread portion 2T, a pair of bead portions 2B, and a pair of side portions 2S as portions thereof. The tread portion 2T comes into contact with a road surface. The tread portion 2T includes the tread 4, the carcass 12, the belt 14, the band 16, and the wings 30. Each bead portion 2B is fitted onto the rim R. The bead portion 2B includes the clinch 8, the bead 10, the carcass 12, the chafer 18, and the inner liner 20. Each side portion 2S extends between the tread portion 2T and the bead portion 2B. The side portion 2S includes the sidewall 6, the clinch 8, the carcass 12, and the inner liner 20.

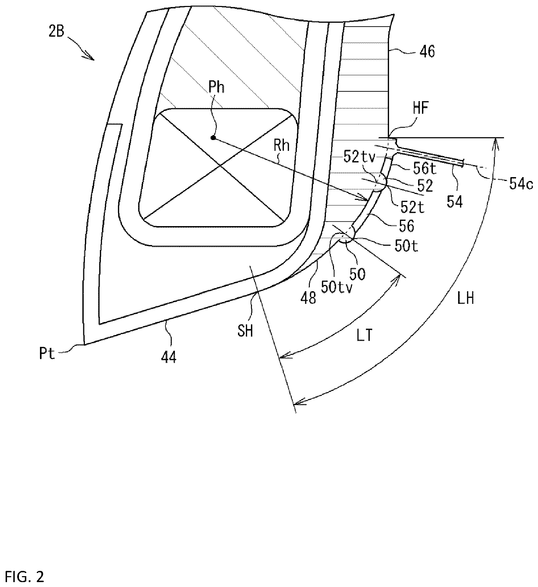

FIG. 2 shows a part of the meridian cross-section of the tire 2. FIG. 2 shows a part of the bead portion 2B. In FIG. 2, the tire 2 is not fitted on the rim R. The bead portion 2B shown in FIG. 2 is the bead portion 2B of a new tire 2 that has not been fitted on the rim R.

The outer surface of the bead portion 2B forms a part of the outer surface SS of the tire 2. The outer surface of the bead portion 2B includes a seat surface 44, a flange surface 46, and a heel surface 48.

The seat surface 44 includes the toe PT, and is located radially inward of the bead 10. In the meridian cross-section in FIG. 2, the contour of the seat surface 44 is a straight line. The seat surface 44 comes into contact with the seat S of the rim R.

The flange surface 46 is located axially outward of the bead 10. In the meridian cross-section in FIG. 2, the contour of the flange surface 46 is a straight line. The contour of the flange surface 46 may be an arc. In this case, the contour of the flange surface 46 is represented by an arc having a center outside the outer surface SS of the tire 2. The flange surface 46 comes into contact with the flange F of the rim R.

The heel surface 48 is located between the seat surface 44 and the flange surface 46. The heel surface 48 comes into contact with a corner between the seat S and the flange F.

In the meridian cross-section in FIG. 2, the contour of the heel surface 48 is represented by an arc. An arrow indicated by reference character Rh indicates the radius of the arc that represents the contour of the heel surface 48. Reference character Ph indicates the center of this arc. The contour of the heel surface 48 is represented by the arc having the center Ph inside the outer surface SS of the tire 2. In the tire 2, of the outer surface of the bead portion 2B, a portion represented by the arc having the radius Rh is the heel surface 48.

In FIG. 2, a position indicated by reference character SH is the boundary between the seat surface 44 and the heel surface 48. A position indicated by reference character HF is the boundary between the heel surface 48 and the flange surface 46. In the tire 2, at the boundary SH, the seat surface 44 is tangent to the heel surface 48. At the boundary HF, the flange surface 46 is tangent to the heel surface 48.

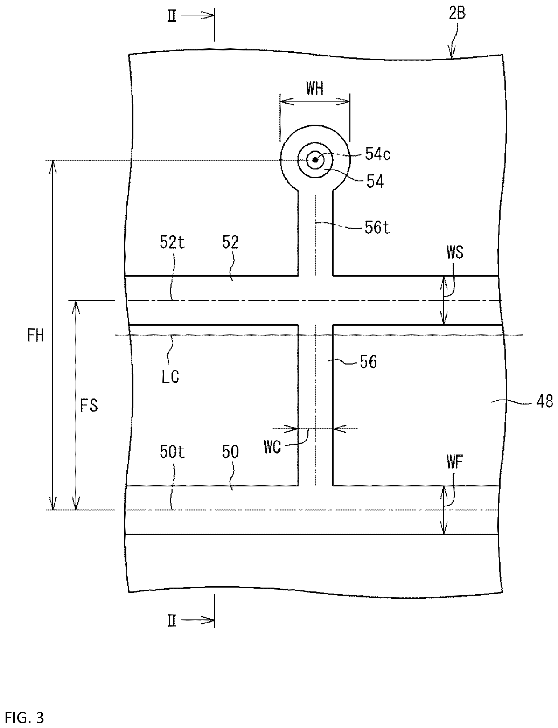

FIG. 3 shows a development of the heel surface 48. In FIG. 3, the right-left direction is the circumferential direction of the tire 2. The upper side is the tread 4 side, and the lower side is the toe Pt side. FIG. 2 described above shows a cross-section (specifically, a meridian cross-section) of the bead portion 2B taken along a line II-II in FIG. 3.

In the tire 2, the bead portion 2B includes a first vent line 50, a second vent line 52, a columnar protrusion 54, and a saw cut 56.

In FIG. 2, for convenience of description, the first vent line 50, the second vent line 52, the columnar protrusion 54, and the saw cut 56 are depicted in an exaggerated manner.

The first vent line 50 is a projection projecting outward from the outer surface (specifically, the heel surface 48) of the bead portion 2B. The first vent line 50 extends in the circumferential direction. A position indicated by reference character 50t is the top of the first vent line 50. In the case where the top 50t of the first vent line 50 is formed as a surface, the center in the width direction of this surface is specified as the top 50t of the first vent line 50.

The second vent line 52 is located outward of the first vent line 50. The second vent line 52 is a projection projecting outward from the outer surface of the bead portion 2B. The second vent line 52 extends in the circumferential direction. A position indicated by reference character 52t is the top of the second vent line 52. In the case where the top 52t of the second vent line 52 is formed as a surface, the center in the width direction of this surface is specified as the top 52t of the second vent line 52.

The columnar protrusion 54 is located outward of the second vent line 52. The columnar protrusion 54 is a whisker-like projection projecting outward from the outer surface of the bead portion 2B. The columnar protrusion 54 is also referred to as a spew. The columnar protrusion 54 may be cut off by the use of the tire 2, and in this case, the columnar protrusion 54 remains as a stump-like trace. A position indicated by reference character 54c is a cross-sectional center of the columnar protrusion 54.

The saw cut 56 extends between the first vent line 50 and the columnar protrusion 54. The saw cut 56 intersects the second vent line 52. In the tire 2, the second vent line 52 divides the saw cut 56.

The saw cut 56 of the tire 2 extends in the radial direction along the heel surface 48. The saw cut 56 is a projection projecting outward from the outer surface of the bead portion 2B. A position indicated by reference character 56t is the top of the saw cut 56. In the case where the top 56t of the saw cut 56 is formed as a surface, the center in the width direction of this surface is specified as the top 56t of the saw cut 56.

The tire 2 is produced as follows. The components of the tire 2, such as the tread 4, the sidewalls 6, and the bead 10, which have been processed into predetermined shapes are combined on a forming machine (not shown). Thus, an unvulcanized tire 2 (hereinafter, also referred to as green tire 2r) is prepared. The green tire 2r is vulcanized and molded in a vulcanizing machine.

In this production of the tire 2, a forming machine and a vulcanizing machine that are generally used in the production of tires are used. The description of the forming machine and the vulcanizing machine is omitted.

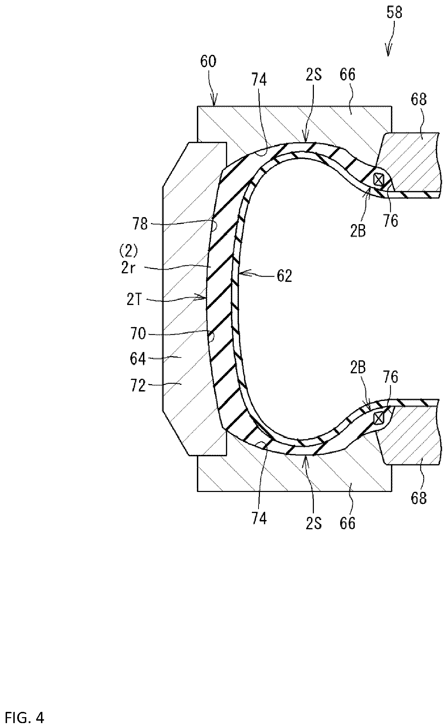

FIG. 4 shows a part of a vulcanizing machine 58 for producing the tire 2 shown in FIG. 1. In FIG. 4, the up-down direction corresponds to the axial direction of the tire 2. The right-left direction corresponds to the radial direction of the tire 2. The direction perpendicular to the drawing sheet of FIG. 4 corresponds to the circumferential direction of the tire 2.

The vulcanizing machine 58 includes a mold 60 and a bladder 62. The bladder 62 is located inward of the mold 60. The bladder 62 is formed from a crosslinked rubber. The interior of the bladder 62 is filled with a gas such as water vapor or nitrogen gas. Accordingly, the bladder 62 expands.

In the vulcanizing machine 58, a cavity is formed between the mold 60 and the expanded bladder 62. The green tire 2r is placed into the cavity. The green tire 2r is pressurized and heated in the mold 60. Thus, the tire 2 is obtained. After the vulcanization step is completed, the tire 2 is taken out from the mold 60.

The production method for the tire 2 includes: a step of preparing the green tire 2r for the tire 2; and a step of pressurizing and heating the green tire 2r in the mold 60. In the pressurizing and heating step (also referred to as vulcanization step), the vulcanization conditions such as temperature, pressure, and time are not particularly limited, and vulcanization conditions that are set for conventional tires are adopted. Instead of the bladder 62, a rigid core made of metal, which is not shown, may be used. In the tire 2, rubber compositions that are used for conventional tires are used as rubber compositions for the components of the tire 2.

In the vulcanization step, the outer surface of the green tire 2r is pressed against the mold 60. The mold 60 shapes the outer surface SS of the tire 2. The inner surface of the green tire 2r is pressed against the bladder 62. The bladder 62 shapes the inner surface US of the tire 2.

The exterior of the tire 2 includes the outer surface SS shaped by the mold 60 and the inner surface US shaped by the bladder 62 (or the rigid core).

The mold 60 shown in FIG. 4 is a segmented mold. The mold 60 includes a tread ring 64, a pair of side plates 66, and a pair of bead rings 68.

Hereinafter, the components of the mold 60 will be described, and for convenience of description, the dimensions of the mold 60 are represented on the basis of the dimensions of the tire 2.

The tread ring 64 forms the tread portion 2T of the tire 2. Each side plate 66 forms the side portion 2S. Each bead ring 68 forms the bead portion 2B. The mold 60 shown in FIG. 4 is in a state where the tread ring 64, the pair of side plates 66, and the pair of bead rings 68 are combined, that is, closed.

The tread ring 64 includes a tread-forming surface 70 in the inner surface thereof. The tread-forming surface 70 shapes the outer surface of the tread portion 2T, that is, the tread surface 22. The tread ring 64 of the mold 60 includes a large number of segments 72. These segments 72 are arranged in a ring shape.

Each side plate 66 is located radially inward of the tread ring 64. The side plate 66 has a ring shape. The side plate 66 includes a sidewall-forming surface 74 in the inner surface thereof. The sidewall-forming surface 74 shapes the outer surface of the side portion 2S.

Each bead ring 68 is located radially inward of the side plate 66. The bead ring 68 has a ring shape. The bead ring 68 includes a bead-forming surface 76 in the inner surface thereof. The bead-forming surface 76 shapes the outer surface of the bead portion 2B.

In the mold 60, a cavity surface 78 for shaping the outer surface SS of the tire 2 is formed by combining the large number of segments 72, the pair of side plates 66, and the pair of bead rings 68. The cavity surface 78 includes the tread-forming surface 70, a pair of the sidewall-forming surfaces 74, and a pair of the bead-forming surfaces 76.

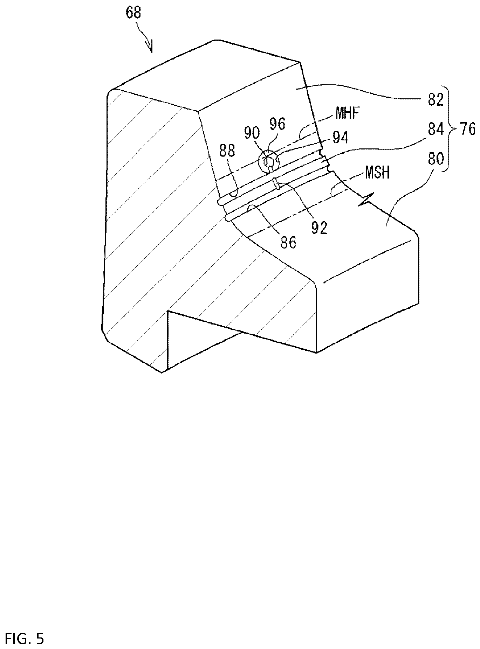

FIG. 5 shows a part of the bead ring 68. In the bead-forming surface 76 of the bead ring 68, a seat-forming surface 80 for forming the seat surface 44 of the bead portion 2B, a flange-forming surface 82 for forming the flange surface 46, and a heel-forming surface 84 for forming the heel surface 48 are formed. The bead-forming surface 76 includes the seat-forming surface 80, the flange-forming surface 82, and the heel-forming surface 84. In a meridian cross-section of the mold 60 corresponding to the meridian cross-section of the tire 2, the contour of the seat-forming surface 80 is represented by a straight line. The contour of the flange-forming surface 82 is represented by a straight line. The contour of the heel-forming surface 84 is represented by an arc.

In FIG. 5, an alternate long and two short dashes line MSH is the boundary between the seat-forming surface 80 and the heel-forming surface 84. At the boundary MSH, the seat-forming surface 80 is tangent to the heel-forming surface 84. An alternate long and two short dashes line MHF is the boundary between the heel-forming surface 84 and the flange-forming surface 82. At the boundary MHF, the flange-forming surface 82 is tangent to the heel-forming surface 84.

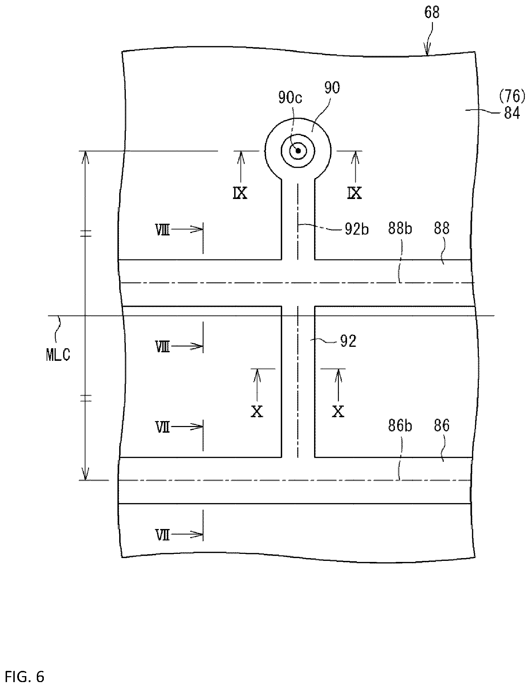

FIG. 6 shows a development of the heel-forming surface 84. In FIG. 6, the right-left direction is the circumferential direction of the tire 2. The upper side is the tread 4 side of the tire 2, and the lower side is the toe Pt side of the tire 2.

In the mold 60, a first vent line groove 86, a second vent line groove 88, a vent hole 90, and a saw cut groove 92 are provided on the bead-forming surface 76 of the bead ring 68.

The first vent line groove 86 is a groove extending in the circumferential direction. The first vent line groove 86 contributes to discharge of air existing between the green tire 2r and the mold 60 in the vulcanization step. The first vent line groove 86 forms the first vent line 50.

In FIG. 6, a position indicated by reference character 86b is the bottom of the first vent line groove 86. The bottom 86b corresponds to the top 50t of the first vent line 50. In the case where the bottom 86b of the first vent line groove 86 is formed as a surface, the center in the width direction of this surface is specified as the bottom 86b of the first vent line groove 86.

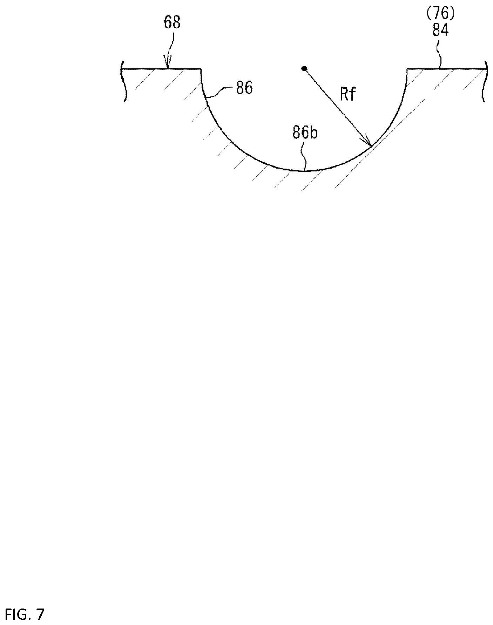

FIG. 7 shows a cross-section of the first vent line groove 86. The first vent line groove 86 has, for example, a cross-section that is recessed in an arc shape from the bead-forming surface 76. In FIG. 7, an arrow Rf indicates the radius of an arc that represents a cross-sectional shape of the first vent line groove 86. In the mold 60, the radius Rf of this arc is preferably not less than 0.4 mm. The radius Rf is preferably not greater than 0.8 mm and more preferably not greater than 0.7 mm.

The second vent line groove 88 is a groove extending in the circumferential direction. The second vent line groove 88 contributes to discharge of air existing between the green tire 2r and the mold 60 in the vulcanization step. The second vent line groove 88 forms the second vent line 52.

In FIG. 6, a position indicated by reference character 88b is the bottom of the second vent line groove 88. The bottom 88b corresponds to the top 52t of the second vent line 52. In the case where the bottom 88b of the second vent line groove 88 is formed as a surface, the center in the width direction of this surface is specified as the bottom 88b of the second vent line groove 88.

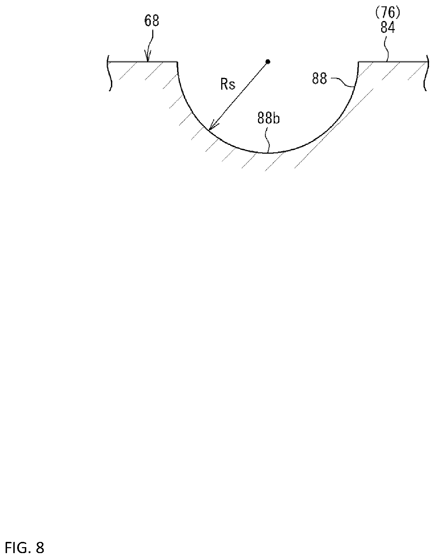

FIG. 8 shows a cross-section of the second vent line groove 88. The second vent line groove 88 has, for example, a cross-section that is recessed in an arc shape from the bead-forming surface 76. In FIG. 8, an arrow Rs indicates the radius of an arc that represents a cross-sectional shape of the second vent line groove 88. In the mold 60, the radius Rs of this arc is preferably not less than 0.4 mm. The radius Rs is preferably not greater than 0.8 mm and more preferably not greater than 0.7 mm.

In the mold 60, the second vent line groove 88 may have a radius Rs different from the radius Rf of the first vent line groove 86. From the viewpoint of smoothly discharging air, the second vent line groove 88 preferably has a radius Rs equal to the radius Rf of the first vent line groove 86.

The vent hole 90 is a hole having a circular cross-section. The vent hole 90 provides communication between the inside and the outside of the mold 60. As shown in FIG. 5, the vent hole 90 is formed by inserting a known vent piece 96 into a hole 94 provided in a body of the bead ring 68. The vent hole 90 contributes to discharge of air existing between the green tire 2r and the mold 60 in the vulcanization step. The vent hole 90 forms the columnar protrusion 54. In FIG. 6, a position indicated by reference character 90c is a cross-sectional center of the vent hole 90. The cross-sectional center 90c corresponds to the cross-sectional center 54c of the columnar protrusion 54.

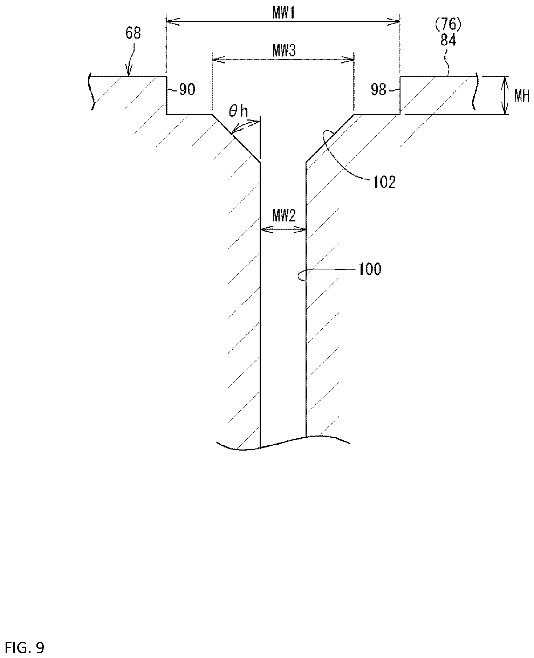

FIG. 9 shows a cross-section of the vent hole 90. The vent hole 90 includes, for example, an opening portion 98, a body portion 100, and a tapered portion 102.

The opening portion 98 has a constant inner diameter and extends in the axial direction of the vent hole 90. The opening portion 98 increases the stiffness of the base of the columnar protrusion 54. The opening portion 98 contributes to preventing the columnar protrusion 54 from being cut when the tire 2 is taken out from the mold 60. In the mold 60, the columnar protrusion 54 formed in the vent hole 90 is taken out from the vent hole 90 without being cut.

In FIG. 9, a length indicated by reference character MW1 is the inner diameter of the opening portion 98. A length indicated by reference character MH is the depth of the opening portion 98. The inner diameter MW1 is preferably not less than 0.4 mm and more preferably not less than 0.6 mm. The inner diameter MW1 is preferably not greater than 1.2 mm and more preferably not greater than 1.0 mm. The depth MH is preferably not less than 0.3 mm and preferably not greater than 0.5 mm.

The body portion 100 has a constant inner diameter and extends in the axial direction of the vent hole 90. The body portion 100 is a cylindrical hole narrower than the opening portion 98. In FIG. 9, a length indicated by reference character MW2 is the inner diameter of the body portion 100. The inner diameter MW2 of the body portion 100 is preferably not less than 0.1 mm and more preferably not greater than 0.6 mm.

The tapered portion 102 connects the opening portion 98 and the body portion 100. The inner diameter of the tapered portion 102 gradually decreases toward the body portion 100. The tapered portion 102 has a truncated cone shape. The tapered portion 102, together with the opening portion 98, contributes to preventing the columnar protrusion 54 from being cut.

In FIG. 9, a length indicated by reference character MW3 is the inner diameter on the opening portion 98 side of the tapered portion 102. An angle θh is an inclination angle of an inclined surface forming the tapered portion 102. The inclination angle θh is represented by an angle of the inclined surface with respect to the axial direction of the vent hole 90.

In the mold 60, the inner diameter MW3 is preferably not less than 0.4 times and preferably not greater than 0.8 times the inner diameter MW1 of the opening portion 98. The inclination angle θh is preferably not less than 25° and preferably not greater than 35°.

The saw cut groove 92 extends between the first vent line groove 86 and the vent hole 90. The saw cut groove 92 intersects the second vent line groove 88. The saw cut groove 92 is a groove extending in the radial direction along the bead-forming surface 76. The saw cut groove 92 contributes to discharge of air existing between the green tire 2r and the mold 60 in the vulcanization step. The saw cut groove 92 forms the saw cut 56.

In FIG. 6, a position indicated by reference character 92b is the bottom of the saw cut groove 92. The bottom 92b corresponds to the top 56t of the saw cut 56. In the case where the bottom 92b of the saw cut groove 92 is formed as a surface, the center in the width direction of this surface is specified as the bottom 92b of the saw cut groove 92.

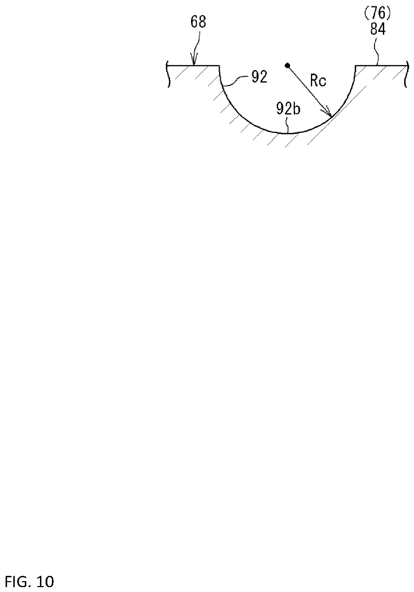

FIG. 10 shows a cross-section of the saw cut groove 92. The saw cut groove 92 has, for example, a cross-section that is recessed in an arc shape from the bead-forming surface 76. In FIG. 10, an arrow Rc indicates the radius of an arc that represents a cross-sectional shape of the saw cut groove 92. In the mold 60, the radius Rc of this arc is preferably not less than 0.4 mm and more preferably not less than 0.5 mm. The radius Rc is preferably not greater than 0.7 mm and more preferably not greater than 0.6 mm.

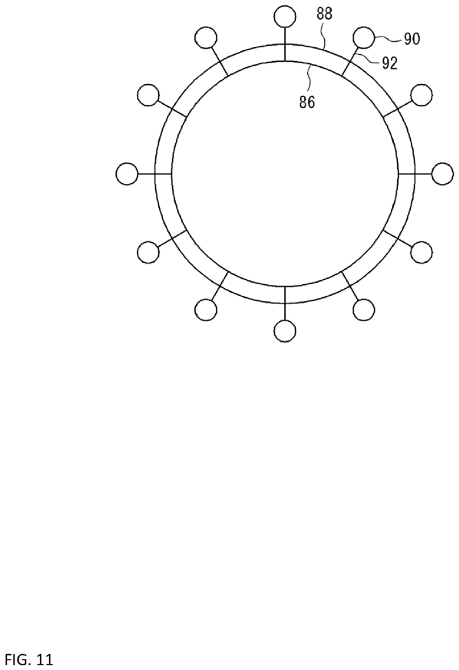

FIG. 11 shows the situation of the arrangement of the first vent line groove 86, the second vent line groove 88, the vent hole 90, and the saw cut groove 92 which are provided in the bead ring 68. The first vent line groove 86, the second vent line groove 88, the vent hole 90, and the saw cut groove 92 form an air discharge path in the bead ring 68.

The first vent line groove 86 forms a ring. The second vent line groove 88 is located outward of the first vent line groove 86. The second vent line groove 88 forms a ring. The second vent line groove 88 is concentric with the first vent line groove 86. The vent hole 90 is located outward of the second vent line groove 88. A plurality of vent holes 90 are provided in the bead ring 68 of the mold 60. These vent holes 90 are aligned in the circumferential direction at predetermined intervals. As described above, the saw cut groove 92 extends between the first vent line groove 86 and each vent hole 90.

In the vulcanization step, when a green tire is pressed against the cavity surface of the mold, air is likely to accumulate between each bead-forming surface of the mold and each bead portion, particularly, between each heel-forming surface and each heel surface.

In the mold 60, the first vent line groove 86, the second vent line groove 88, the vent hole 90, and the saw cut groove 92 are provided on the bead-forming surface 76. In the mold 60, air is effectively guided to the vent hole 90, which provides communication between the inside and the outside of the mold 60, by the first vent line groove 86, the second vent line groove 88, and the saw cut groove 92. The air is discharged to the outside of the mold 60 through the vent hole 90.

In the mold 60, air accumulations are prevented from being formed between the bead-forming surface 76 and the bead portion 2B in the vulcanization step.

In the mold 60, from the viewpoint of effectively discharging air, preferably, the same number of saw cut grooves 92 as that of the vent holes 90 are provided, and all the vent holes 90 are connected to the first vent line groove 86 by the saw cut grooves 92. In this case, more preferably, the plurality of vent holes 90 provided in the bead ring 68 are arranged at equal intervals in the circumferential direction.

In FIG. 6, a solid line MLC extending in the right-left direction is a position indicating half of the length from the bottom 86b of the first vent line groove 86 to the cross-sectional center 90c of the vent hole 90. This length is measured along the bead-forming surface 76 with the point of intersection of the bead-forming surface 76 and a normal line that is normal to the bead-forming surface 76 and passes through the bottom 86b of the first vent line groove 86, as the bottom 86b of the first vent line groove 86. The solid line MLC is the midpoint between the first vent line groove 86 and the vent hole 90 in the mold 60.

In FIG. 3, a double-headed arrow FH indicates the distance from the first vent line 50 to the columnar protrusion 54. A double-headed arrow FS indicates the distance from the first vent line 50 to the second vent line 52. The distance FH and the distance FS are measured along the outer surface of the bead portion 2B with the point of intersection (position indicated by reference character 50 tv in FIG. 2) of the outer surface of the bead portion 2B and a normal line that is normal to the outer surface of the bead portion 2B and passes through the top 50t of the first vent line 50, as the top 50t of the first vent line 50, and with the point of intersection (position indicated by reference character 52tv in FIG. 2) of the outer surface of the bead portion 2B and a normal line that is normal to the outer surface of the bead portion 2B and passes through the top 52t of the second vent line 52, as the top 52t of the second vent line 52.

The distance FH is represented by the length from the top 50t of the first vent line 50 to the cross-sectional center 54c of the columnar protrusion 54. The distance FS is represented by the length from the top 50t of the first vent line 50 to the top 52t of the second vent line 52.

In FIG. 3, a solid line LC extending in the right-left direction is a position indicating half of the length FH from the top 50t of the first vent line 50 to the cross-sectional center 54c of the columnar protrusion 54. The solid line LC is the midpoint between the first vent line 50 and the columnar protrusion 54 in the tire 2. The midpoint LC corresponds to the midpoint MLC between the first vent line groove 86 and the vent hole 90 in the mold 60.

In the mold 60, the second vent line groove 88, specifically, the bottom 88b of the second vent line groove 88, is located on the vent hole 90 side with respect to the midpoint MLC between the first vent line groove 86 and the vent hole 90. Therefore, in the tire 2 obtained with the mold 60, the second vent line 52, specifically, the top 52t of the second vent line 52, is located on the columnar protrusion 54 side with respect to the midpoint LC between the first vent line 50 and the columnar protrusion 54. In other words, the ratio (FS/FH) of the distance FS from the first vent line 50 to the second vent line 52 to the distance FH from the first vent line 50 to the columnar protrusion 54 exceeds 50%.

In the tire 2, the columnar protrusion 54 (in other words, spew) is less likely to be jammed between the bead portion 2B and the rim R than in the case where the top 52t of the second vent line 52 is located at the midpoint LC between the first vent line 50 and the columnar protrusion 54. In the tire 2, the spew is prevented from being jammed when fitted onto the rim R.

As described above, the mold 60 for the tire 2 prevents air accumulations from being formed between the bead-forming surface 76 and the bead portion 2B in the vulcanization step. The tire 2 can prevent the spew from being jammed when fitted onto the rim R, while maintaining good appearance quality.

From the viewpoint of effectively preventing the columnar protrusion 54 from being jammed when fitted onto the rim R, the ratio (FS/FH) of the distance FS from the first vent line 50 to the second vent line 52 to the distance FH from the first vent line 50 to the columnar protrusion 54 is preferably not less than 55% and more preferably not less than 60%. From the viewpoint that the discharge path formed by the first vent line groove 86, the second vent line groove 88, the vent hole 90, and the saw cut groove 92 effectively promotes discharge of air, the ratio (FS/FH) is preferably not greater than 70% and more preferably not greater than 65%.

In FIG. 3, a length indicated by reference character WF is the width of the first vent line 50. A length indicated by reference character WS is the width of the second vent line 52. A length indicated by reference character WH is the outer diameter of the columnar protrusion 54. A length indicated by reference character WC is the width of the saw cut 56.

In the tire 2, the width WC of the saw cut 56 is preferably smaller than the outer diameter WH of the columnar protrusion 54. Accordingly, air effectively flows from the saw cut groove 92 into the vent hole 90. In the tire 2, good appearance is obtained. From this viewpoint, the ratio (WC/WH) of the width WC of the saw cut 56 to the outer diameter WH of the columnar protrusion 54 is preferably not greater than 85% and more preferably not greater than 80%. From the viewpoint that the saw cut groove 92 can effectively contribute to discharge of air and the columnar protrusion 54 is effectively prevented from being jammed between the bead portion 2B and the rim R, the ratio (WC/WH) is preferably not less than 40% and more preferably not less than 50%.

In the tire 2, the outer diameter WH of the columnar protrusion 54 is preferably not less than 0.8 mm and not greater than 2.4 mm.

When the outer diameter WH is set to be not less than 0.8 mm, the vent hole 90 can effectively contribute to discharge of air. The columnar protrusion 54 formed in the vent hole 90 has moderate stiffness and thus is less likely to be cut. The columnar protrusion 54 is less likely to be jammed between the bead portion 2B and the rim R. From this viewpoint, the outer diameter WH is more preferably not less than 1.2 mm.

When the outer diameter WH is set to be not greater than 2.4 mm, the size of the columnar protrusion 54 is appropriately maintained. In this case as well, the columnar protrusion 54 is less likely to be jammed between the bead portion 2B and the rim R. From this viewpoint, the outer diameter WH is more preferably not greater than 2.0 mm.

In the tire 2, the width WF of the first vent line 50 is preferably smaller than the outer diameter WH of the columnar protrusion 54. Accordingly, the size of the first vent line 50 is appropriately maintained. The first vent line 50 effectively prevents the columnar protrusion 54 from being jammed between the bead portion 2B and the rim R. From this viewpoint, the ratio (WF/WH) of the width WF of the first vent line 50 to the outer diameter WH of the columnar protrusion 54 is preferably not greater than 90% and more preferably not greater than 85%. From the viewpoint that the first vent line groove 86 effectively functions as an air flow path and good appearance is obtained, the ratio (WF/WH) is preferably not less than 60% and more preferably not less than 70%.

From the viewpoint that air effectively flows into the vent hole 90 through the saw cut groove 92, the ratio (WC/WF) of the width WC of the saw cut 56 to the width WF of the first vent line 50 is preferably not less than 60% and more preferably not less than 65%. From the viewpoint of effectively suppressing the influence of the saw cut 56 on appearance, the ratio (WC/WF) is preferably not greater than 80% and more preferably not greater than 75%.

In the tire 2, the width WS of the second vent line 52 is preferably smaller than the outer diameter WH of the columnar protrusion 54. Accordingly, the size of the second vent line 52 is appropriately maintained. The second vent line 52 effectively prevents the columnar protrusion 54 from being jammed between the bead portion 2B and the rim R. From this viewpoint, the ratio (WS/WH) of the width WS of the second vent line 52 to the outer diameter WH of the columnar protrusion 54 is preferably not greater than 90% and more preferably not greater than 85%. From the viewpoint that the second vent line groove 88 effectively functions as an air flow path and good appearance is obtained, the ratio (WS/WH) is preferably not less than 60% and more preferably not less than 70%.

From the viewpoint that air effectively flows into the vent hole 90 through the saw cut groove 92, the ratio (WC/WS) of the width WC of the saw cut 56 to the width WS of the second vent line 52 is preferably not less than 60% and more preferably not less than 65%. From the viewpoint of effectively suppressing the influence of the saw cut 56 on appearance, the ratio (WC/WS) is preferably not greater than 80% and more preferably not greater than 75%.

In FIG. 2, a length indicated by reference character LH is the length from the boundary SH between the seat surface 44 and the heel surface 48 to the boundary HF between the heel surface 48 and the flange surface 46. The length LH is measured along the heel surface 48. In the meridian cross-section, the contour of the heel surface 48 is represented by the arc, and thus the length LH of the heel surface 48 is equal to the length of this arc. A length indicated by reference character LT is the length from the boundary SH between the seat surface 44 and the heel surface 48 to the top 50t of the first vent line 50. The length LT is represented by a length, measured along the heel surface 48, from the boundary SH to the position 50tv, on the outer surface of the bead portion 2B, corresponding to the top 50t of the first vent line 50.

In the tire 2, in the meridian cross-section, the first vent line 50 is preferably located at a center portion of the heel surface 48. Accordingly, the discharge path including the first vent line groove 86 effectively promotes discharge of air, and the columnar protrusion 54 which is formed outward of the first vent line 50 is effectively prevented from being jammed. From this viewpoint, the ratio (LT/LH) of the length LT from the boundary SH between the seat surface 44 and the heel surface 48 to the top 50t of the first vent line 50, to the length LH of the heel surface 48, is preferably not less than 40% and more preferably not less than 45%. The ratio (LT/LH) is preferably not greater than 60% and more preferably not greater than 55%.

In the tire 2, the columnar protrusion 54 is located at a portion at the boundary HF between the heel surface 48 and the flange surface 46. Accordingly, the influence of the columnar protrusion 54 on appearance quality is suppressed, and the columnar protrusion 54 is effectively prevented from being jammed. From this viewpoint, the columnar protrusion 54 is preferably located at the portion at the boundary HF between the heel surface 48 and the flange surface 46.

In the present disclosure, the columnar protrusion 54 being located at the portion at the boundary HF between the heel surface 48 and the flange surface 46 means that the cross-sectional center 54c of the columnar protrusion 54 is located in a zone from a position away from the boundary HF between the heel surface 48 and the flange surface 46 toward the tread 4 side by 5 mm to a position away from the boundary HF toward the toe Pt side by 5 mm.

As described above, in the mold 60, the plurality of vent holes 90 are provided in the bead ring 68. From the viewpoint of sufficiently discharging air, the number of vent holes 90 provided in the bead ring 68 is preferably not less than 12. From the viewpoint of suppressing the influence of the columnar protrusion 54 on appearance, this number is preferably not greater than 30 and more preferably not greater than 18.

As described above, in the tire 2, in the meridian cross-section thereof, the contour of the heel surface 48 of the bead portion 2B is represented by the arc.

In the tire 2, the radius Rh of the arc that represents the contour of the heel surface 48 is preferably not less than 8.0 mm. The heel surface 48 has a more gently rounded shape than a conventional heel surface. Therefore, when the bead portion 2B passes over the hump of the rim R, the bead portion 2B is inhibited from being caught on the hump. Since the bead portion 2B is less likely to be caught on the hump, the tire 2 can reduce a fitting pressure. From this viewpoint, the radius Rh is more preferably not less than 9.0 mm and further preferably not less than 10.0 mm.

The radius Rh is preferably not greater than 12.0 mm. Accordingly, the bead portion 2B comes into sufficient contact with the rim R. Accordingly, the bead portion 2B is stably held by the rim R. From this viewpoint, the radius Rh is more preferably not greater than 11.0 mm.

When the bead portion 2B is formed such that the heel surface 48 has a more gently rounded shape than a conventional heel surface, there is a concern that in the production of the tire 2, discharge of air trapped between the mold 60 and the bead portion 2B is delayed, resulting in deterioration of the appearance of the bead portion 2B.

However, as described above, the discharge path provided in the bead ring 68 promotes discharge of air trapped between the mold 60 and the bead portion 2B. With the mold 60, the tire 2 having good appearance quality is obtained. In addition, since the second vent line 52 is located on the columnar protrusion 54 side with respect to the midpoint LC between the first vent line 50 and the columnar protrusion 54, the columnar protrusion 54 is also prevented from being jammed when the tire 2 is fitted onto the rim R.

As described above, according to the present invention, a tire that has good appearance quality and can prevent spews from being jammed when fitted onto a rim, and a tire mold and a tire production method for obtaining this tire, are obtained.

### EXAMPLES

Hereinafter, the present invention will be described in further detail by means of examples, etc., but the present invention is not limited to these examples.

### [Example 1]

A pneumatic tire for a passenger car (tire size = 185/60R15) having the basic structure shown in FIGS. 1 to 3 and having specifications shown in Table 1 below was obtained.

In Example 1, the outer diameter WH of each columnar protrusion was 1.0 mm. The number of columnar protrusions was 12. The cross-sectional center of the columnar protrusion was caused to coincide with the boundary HF between the heel surface and the flange surface. The ratio (WC/WH) of the width WC of the saw cut to the outer diameter WH of the columnar protrusion was 50%. The ratio (WF/WH) of the width WF of the first vent line to the outer diameter WH of the columnar protrusion was 70%. The ratio (WS/WH) of the width WS of the second vent line to the outer diameter WH of the columnar protrusion was 70%.

The ratio (FS/FH) of the length FS from the top of the first vent line to the top of the second vent line to the length FH from the top of the first vent line to the cross-sectional center of the columnar protrusion was 60%.

The ratio (LT/LH) of the length LT from the boundary SH between the seat surface and the heel surface to the top of the first vent line to the length LH of the heel surface was 50%.

The radius Rh of the arc that represents the contour of the heel surface was 9.0 mm.

### [Comparative Example 1]

A tire of Comparative Example 1 was obtained in the same manner as Example 1, except that one vent line was provided at the center of the heel surface, and 12 columnar protrusions were formed on the vent line.

In Comparative Example 1, a discharge path other than a discharge path corresponding to the one vent line and the 12 columnar protrusions was not provided. The tire of Comparative Example 1 is a conventional tire.

The configuration of the vent line is the same as that of the first vent line of Example 1, and the configuration of each columnar protrusion is the same as that of each columnar protrusion of Example 1.

### [Comparative Example 2]

A tire of Comparative Example 2 was obtained in the same manner as Example 1, except that the outer diameter WH of each columnar protrusion was changed to 1.4 mm, and the ratio (WC/WH), the ratio (WF/WH), the ratio (WS/WH), the ratio (FS/FH), and the ratio (LT/LH) were set as shown in Table 1 below.

### [Example 2]

A tire of Example 2 was obtained in the same manner as Example 1, except that the radius Rh was set as shown in Table 1 below.

### [Appearance]

The appearance of the bead portions of a new tire was observed to check the state of occurrence of scars such as bareness. The number of tires in which the occurrence of scars was confirmed was counted, and the rate of occurrence of scars was obtained. The results are shown in Table 1 below as indexes with the result of Comparative Example 1 being regarded as 100. The higher the value is, the higher the rate of occurrence of scars is.

### [Jamming]

A tire was fitted to a rim (size = 15×5.5J) and inflated with air to adjust the internal pressure of the tire to 230 kPa. The tire was maintained in this state for 24 hours, and then removed from the rim, and the presence/absence of a jam trace of the columnar protrusion was checked. For all tires for which this checking had been made (in this evaluation, ten tires), the case where a jam trace was not observed is shown as "N", and the case where a jam trace was observed is shown as "Y", in Table 1 below.

### [Fitting Pressure]

A tire was fitted to a rim (size = 15×5.5J) and inflated with air (supply pressure = 600 kPa), whereby the tire was mounted on the rim. At the moment when the bead portion of the tire passed over the hump of the rim, the supply of air was temporarily stopped, and the pressure (fitting pressure) was measured. The results are shown in Table 1 below as indexes with the result of Comparative Example 1 being regarded as 100. The higher the value is, the higher the fitting pressure is.

**[Table 1]**

| | Comparative Example 1 | Comparative Example 2 | Example 1 | Example 2 |
|---|---|---|---|---|
| WC/WH [%] | - | 100 | 50 | 50 |
| WF/WH | - | 143 | 70 | 70 |
| WS/WH | - | 143 | 70 | 70 |
| FS/FH [%] | - | 50 | 60 | 60 |
| LT/LH [%] | - | 30 | 50 | 50 |
| Rh [mm] | 9.0 | 9.0 | 9.0 | 11.0 |
| Appearance | 100 | 90 | 60 | 60 |
| Jamming | Y | Y | N | N |
| Fitting pressure | 100 | 100 | 100 | 90 |

As shown in Table 1, in each Example, spews are prevented from being jammed when fitted onto a rim, while appearance quality is improved. From the evaluation results, advantages of the present invention are clear.

The above-described technology to prevent spews from being jammed when fitted onto a rim can also be applied to various tires.

## Claims

1. A tire (2) comprising a bead portion (2B) to be fitted onto a rim (R), wherein
the bead portion (2B) includes a first vent line (50) extending in a circumferential direction, a second vent line (52) located outward of the first vent line (50) and extending in the circumferential direction, and **characterised by**
a columnar protrusion (54) located outward of the second vent line (52), and a saw cut (56) extending between the first vent line (50) and the columnar protrusion (54) and intersecting the second vent line (52), wherein
the first vent line (50), the second vent line (52), the columnar protrusion (54), and the saw cut (56) project from an outer surface of the bead portion (2B), and
the second vent line (52) is located on the columnar protrusion (54) side with respect to a midpoint (LC) between the first vent line (50) and the columnar protrusion (54).

2. The tire (2) according to claim 1, wherein the saw cut (56) has a width (WC) smaller than an outer diameter (WH) of the columnar protrusion (54).

3. The tire (2) according to claim 1 or 2, wherein a ratio (FS/FH) of a distance (FS) from the first vent line (50) to the second vent line (52) to a distance (FH) from the first vent line (50) to the columnar protrusion (54) is not greater than 70%.

4. The tire (2) according to any one of claims 1 to 3, wherein
the bead portion (2B) includes a bead (10) including a core (32) extending in the circumferential direction and an apex (34) located radially outward of the core (32),
the outer surface of the bead portion (2B) includes a seat surface (44) located radially inward of the bead (10), a flange surface (46) located axially outward of the bead (10), and a heel surface (48) located between the seat surface (44) and the flange surface (46),
in a cross-section of the tire (2) along a plane including a rotation axis of the tire (2), a contour of the heel surface (48) is represented by an arc, and
the first vent line (50) is located at a center portion of the heel surface (48).

5. The tire (2) according to claim 4, wherein the columnar protrusion (54) is located at a portion at a boundary (HF) between the heel surface (48) and the flange surface (46).

6. A tire mold (60) for producing the tire (2) according to any one of claims 1 to 5, the tire mold (60) comprising a bead ring (68) for forming the bead portion (2B), wherein
the bead ring (68) includes a bead-forming surface (76) for forming the outer surface of the bead portion (2B),
a first vent line groove (86) for forming the first vent line (50), a second vent line groove (88) for forming the second vent line (52), a vent hole (90) for forming the columnar protrusion (54), and a saw cut groove (92) for forming the saw cut (56) are provided on the bead-forming surface (76), and
the second vent line groove (88) is located on the vent hole (90) side with respect to a midpoint (MLC) between the first vent line groove (86) and the vent hole (90).

7. A tire production method for producing the tire (2) according to any one of claims 1 to 5, the tire production method comprising the steps of:
preparing a green tire for the tire (2); and
pressurizing and heating the green tire within a mold (60), wherein
the mold (60) includes a bead ring (68) for forming the bead portion (2B),
the bead ring (68) includes a bead-forming surface (76) for forming the outer surface of the bead portion (2B),
a first vent line groove (86) for forming the first vent line (50), a second vent line groove (88) for forming the second vent line (52), a vent hole (90) for forming the columnar protrusion (54), and a saw cut groove (92) for forming the saw cut (56) are provided on the bead-forming surface (76), and
the second vent line groove (88) is located on the vent hole (90) side with respect to a midpoint (MLC) between the first vent line groove (86) and the vent hole (90).

## Patentansprüche

1. Reifen (2) mit einem Wulstabschnitt (2B), der auf eine Felge (R) aufzuziehen ist, wobei
der Wulstabschnitt (2B) eine erste Entlüftungsleitung (50), die sich in einer Umfangsrichtung erstreckt und eine zweite Entlüftungsleitung (52), die außen von der ersten Entlüftungsleitung (50) angeordnet ist und sich in der Umfangsrichtung erstreckt, umfasst, und der **gekennzeichnet ist durch**
einen säulenförmigen Vorsprung (54), der außen von der zweiten Entlüftungsleitung (52) angeordnet ist, und einen Sägeschnitt (56), der sich zwischen der ersten Entlüftungsleitung (50) und dem säulenförmigen Vorsprung (54) erstreckt und die zweite Entlüftungsleitung (52) schneidet, wobei
die erste Entlüftungsleitung (50), die zweite Entlüftungsleitung (52), der säulenförmige Vorsprung (54) und der Sägeschnitt (56) von einer Außenfläche des Wulstabschnitts (2B) vorstehen, und
die zweite Entlüftungsleitung (52) auf der Seite des säulenförmigen Vorsprungs (54) in Bezug auf einen Mittelpunkt (LC) zwischen der ersten Entlüftungsleitung (50) und dem säulenförmigen Vorsprung (54) angeordnet ist.

2. Reifen (2) nach Anspruch 1, wobei der Sägeschnitt (56) eine Breite (WC) hat, die kleiner ist als ein Außendurchmesser (WH) des säulenförmigen Vorsprungs (54).

3. Reifen (2) nach Anspruch 1 oder 2, wobei das Verhältnis (FS/FH) eines Abstands (FS) von der ersten Entlüftungsleitung (50) zu der zweiten Entlüftungsleitung (52) zu einem Abstand (FH) von der ersten Entlüftungsleitung (50) zu dem säulenförmigen Vorsprung (54) nicht größer als 70 % ist.

4. Reifen (2) nach einem der Ansprüche 1 bis 3, wobei
der Wulstabschnitt (2B) einen Wulst (10) mit einem sich in Umfangsrichtung erstreckenden Kern (32) und einem Kernreiter (34) aufweist, der radial außen von dem Kern (32) angeordnet ist,
die Außenfläche des Wulstabschnitts (2B) eine Sitzfläche (44), die radial innen von dem Wulst (10) angeordnet ist, eine Hornfläche (46), die axial außen von dem Wulst (10) angeordnet ist, und eine Fersenfläche (48), die zwischen der Sitzfläche (44) und der Hornfläche (46) angeordnet ist, aufweist,
in einem Querschnitt des Reifens (2) entlang einer Ebene, die eine Drehachse des Reifens (2) einschließt, eine Kontur der Fersenfläche (48) durch einen Bogen dargestellt ist, und
die erste Entlüftungsleitung (50) in einem mittleren Abschnitt der Fersenfläche (48) angeordnet ist.

5. Reifen (2) nach Anspruch 4, wobei der säulenförmige Vorsprung (54) an einem Abschnitt an einer Grenze (HF) zwischen der Fersenfläche (48) und der Hornfläche (46) angeordnet ist.

6. Reifenform (60) zur Herstellung des Reifens (2) nach einem der Ansprüche 1 bis 5, wobei die Reifenform (60) einen Wulstring (68) zum Bilden des Wulstabschnitts (2B) aufweist, wobei
der Wulstring (68) eine Wulstbildungsfläche (76) zum Bilden der Außenfläche des Wulstabschnitts (2B) aufweist,
eine erste Entlüftungsleitungsnut (86) zum Bilden der ersten Entlüftungsleitung (50), eine zweite Entlüftungsleitungsnut (88) zum Bilden der zweiten Entlüftungsleitung (52), ein Entlüftungsloch (90) zum Bilden des säulenförmigen Vorsprungs (54) und eine Sägeschnittnut (92) zum Bilden des Sägeschnitts (56) auf der Wulstbildungsfläche (76) vorgesehen sind, und
die zweite Entlüftungsleitungsnut (88) auf der Seite des Entlüftungslochs (90) in Bezug auf einen Mittelpunkt (MLC) zwischen der ersten Entlüftungsleitungsnut (86) und dem Entlüftungsloch (90) angeordnet ist.

7. Reifenherstellungsverfahren zur Herstellung des Reifens (2) nach einem der Ansprüche 1 bis 5, wobei das Reifenherstellungsverfahren die folgenden Schritte umfasst:
Vorbereiten eines Reifenrohlings für den Reifen (2); und
Beaufschlagen des Rohreifens mit Druck und Erwärmen desselben in einer Form (60), wobei
die Form (60) einen Wulstring (68) zum Bilden des Wulstabschnitts (2B) umfasst,
der Wulstring (68) eine Wulstbildungsfläche (76) zum Bilden der Außenfläche des Wulstabschnitts (2B) umfasst,
eine erste Entlüftungsleitungsnut (86) zum Bilden der ersten Entlüftungsleitung (50), eine zweite Entlüftungsleitungsnut (88) zum Bilden der zweiten Entlüftungsleitung (52), ein Entlüftungsloch (90) zum Bilden des säulenförmigen Vorsprungs (54) und eine Sägeschnittnut (92) zum Bilden des Sägeschnitts (56) auf der Wulstbildungsfläche (76) vorgesehen sind, und
die zweite Entlüftungsleitungsnut (88) auf der Seite des Entlüftungslochs (90) in Bezug auf einen Mittelpunkt (MLC) zwischen der ersten Entlüftungsleitungsnut (86) und dem Entlüftungsloch (90) angeordnet ist.

## Revendications

1. Pneumatique (2) comprenant une portion formant talon (2B) devant être ajustée sur une jante (R), dans lequel
la portion formant talon (2B) inclut une première ligne d'évent (50) s'étendant dans une direction circonférentielle, une seconde ligne d'évent (52) située à l'extérieur de la première ligne d'évent (50) et s'étendant dans la direction circonférentielle, et
**caractérisé par**
une protubérance colonnaire (54) située à l'extérieur de la seconde ligne d'évent (52), et un trait de scie (56) s'étendant entre la première ligne d'évent (50) et la protubérance colonnaire (54) et recoupant la seconde ligne d'évent (52), dans lequel
la première ligne d'évent (50), la seconde ligne d'évent (52), la protubérance colonnaire (54), et le trait de scie (56) se projettent par rapport à une surface extérieure de la portion formant talon (2B), et
la seconde ligne d'évent (52) est située sur le côté de la protubérance colonnaire (54) par rapport à un point à mi-chemin (LC) entre la première ligne d'évent (50) et la protubérance colonnaire (54).

2. Pneumatique (2) selon la revendication 1, dans lequel le trait de scie (56) a une largeur (WC) plus petite qu'un diamètre extérieur (WH) de la protubérance colonnaire (54).

3. Pneumatique (2) selon la revendication 1 ou 2, dans lequel un rapport (FS/FH) d'une distance (FS) depuis la première ligne d'évent (50) jusqu'à la seconde ligne d'évent (52) sur une distance (FH) depuis la première ligne d'évent (50) jusqu'à la protubérance colonnaire (54) n'est pas supérieur à 70 %.

4. Pneumatique (2) selon l'une quelconque des revendications 1 à 3, dans lequel
la portion formant talon (2B) inclut un talon (10) incluant une âme (32) s'étendant dans la direction circonférentielle et un sommet (34) situé radialement à l'extérieur de l'âme (32),
la surface extérieure de la portion formant talon (2B) inclut une surface d'assise (44) située radialement à l'intérieur du talon (10), une surface de rebord (46) située axialement à l'extérieur du talon (10), et une surface d'arrondi (48) située entre la surface d'assise (44) et la surface de rebord (46),
dans une section transversale du pneumatique (2) le long d'un plan incluant un axe de rotation du pneumatique (2), un contour de la surface d'arrondi (48) est représenté par un arc, et
la première ligne d'évent (50) est située au niveau d'une portion centrale de la surface d'arrondi (48).

5. Pneumatique (2) selon la revendication 4, dans lequel la protubérance colonnaire (54) est située au niveau d'une portion à une frontière (HF) entre la surface d'arrondi (48) et la surface de rebord (46).

6. Moule de pneumatique (60) destiné à produire le pneumatique (2) selon l'une quelconque des revendications 1 à 5, le moule de pneumatique (60) comprenant un anneau à talon (68) pour former la portion formant talon (2B) dans lequel
l'anneau à talon (68) inclut une surface de formage de talon (76) destinée à former la surface extérieure de la portion formant talon (2B),
une rainure à première ligne d'évent (86) destinée à former la première ligne d'évent (50), une rainure à seconde ligne d'évent (88) destinée à former la seconde ligne d'évent (52), un trou à évent (90) destiné à former la protubérance colonnaire (54), et une rainure à trait de scie (92) destinée à former le trait de scie (56) sont prévus sur la surface de formage de talon (76), et
la rainure à seconde ligne d'évent (88) est située sur le côté du trou à évent (90) par rapport à un point à mi-chemin (MLC) entre la rainure à première ligne d'évent (86) et le trou à évent (90).

7. Procédé de production de pneumatique pour produire le pneumatique (2) selon l'une quelconque des revendications 1 à 5, le procédé de production de pneumatique comprenant les étapes consistant à :
préparer un pneu cru pour le pneumatique (2) ; et
pressuriser et chauffer le pneu cru à l'intérieur d'un moule (60), dans lequel le moule (60) inclut un anneau à talon (68) destiné à former la portion formant talon (2B),
l'anneau à talon (68) inclut une surface de formage de talon (76) destinée à former la surface extérieure de la portion formant talon (2B),
une rainure à première ligne d'évent (86) destinée à former la première ligne d'évent (50), une rainure à seconde ligne d'évent (88) destinée à former la seconde ligne d'évent (52), un trou à évent (90) destiné à former la protubérance colonnaire (54), et une rainure à trait de scie (92) destinée à former le trait de scie (56) sont prévus sur la surface de formage de talon (76), et
la rainure à seconde ligne d'évent (88) est située sur le côté du trou à évent (90) par rapport à un point à mi-chemin (MLC) entre la rainure à première ligne d'évent (86) et le trou à évent (90).
